# EUROPEAN PATENT SPECIFICATION

(11) **EP 0 433 723 B1**
(45) Date of publication and mention of the grant of the patent: **01.03.1995**
(21) Application number: 90122791.8
(22) Date of filing: 29.11.1990
(51) Int. Cl.: C08L 69/00, C08L 55/02, C08L 25/12, C08K 5/10, C08K 5/20

(54) **Compositions of aromatic polycarbonate resins and SAN or SAN and ABS resins**
Zusammensetzungen von aromatischen Polycarbonatharzen mit SAN oder SAN und ABS
Compositions de résines de polycarbonates aromatiques contenant de SAN ou de SAN et de ABS

(30) Priority: 20.12.1989 FR 8916922
(43) Date of publication of application: 26.06.1991
(60) Divisional application: 93120066.1
(73) Proprietor: GENERAL ELECTRIC COMPANY, Schenectady, N.Y. 12151 (US)
(72) Inventor: Lo, Tungfai, 60134 Villers Saint - Sepulchre (FR); Erpelding, Michel, 60134 Villers Saint - Sepulchre (FR)
(74) Representative: Pratt, Richard Wilson

(56) References cited:
- EP-A- 0 007 437
- EP-A- 0 262 566
- EP-A- 0 340 580
- EP-A- 0 352 458
- US-A- 4 340 683
- US-A- 4 554 302

## Description

The present invention relates to moulding compositions comprising an aromatic polycarbonate resin and a styrene/acrylonitrile (SAN) copolymer or a styrene/ acrylonitrile (SAN) and acrylonitrile/butadiene/styrene (ABS) resin copolymer and in particular such compositions having an improved multiaxial impact resistance and an improved impact resistance at low temperature.

Compositions of aromatic polycarbonate resins and SAN or SAN and ABS resins have a plurality of mechanical properties that render these compositions particularly suitable for the moulding of parts and specifically parts for the automotive industry.

It is known to add to moulding compositions of polycarbonate or ABS resins internal or external lubricants to improve flowability of the composition and to allow easier processing of these compositions as well as to facilitate mold release of parts moulded from these compositions.

However, the addition of such lubricants generally results in a decrease of the impact strength of the resulting compositions.

US-A-4,554,302 describes an aromatic polycarbonate composition containing an N,N-dialkylamide, for example N,N-dimethylamide, as mold release agent.

JP-A-25,457/55 (=1980) describes moulding compositions of thermoplastic polymers containing bisamides of higher fatty acids for improving surface appearance of mouldings.

JP-A-75,443/55 (=1980) describes moulding compositions of polycarbonate resin containing an amide of a fatty acid which have good mechanical properties and are transparent.

EP-A-0,262,566 describes compositions of polycarbonate and, optionally, of other thermoplastics containing, as lubricant, oxidized polyethylenes having number average molecular weight ranging from 7,000 to 15,000.

EP-A-0,262,566 indicates that the specific lubricants used may increase the impact strength of the compositions when added in a quantity of 0.1% (Norm DIN 54 355). It also shows (comparative example 3) that oxidized polyethylenes having a number average molecular weight of 4,000 result at a concentration of 0.5% in a much stronger decrease of the impact strength of the polycarbonate compositions as compared to the higher molecular weight Lubricants.

It has now been discovered that the use of specific lubricants in combination with compositions of aromatic polycarbonates and SAN resins or SAN resins and ABS resins not only improves the flowability of the compositions but also improves surprisingly the impact strengths of the compositions and in particular the multiaxial and low temperature Izod impact strengths without being or significantly being detrimental to the other valuable properties of these compositions.

The present invention provides a moulding compositions comprising:
(a) 10 to 75% by weight, preferably 10 to 50% by weight, of an aromatic polycarbonate resin, and
(b) 25 to 90% by weight, preferably 50 to 90% by weight, of a component consisting of:
   (i) 5 to 100% by weight, preferably 35 to 100% by weight, of a styrene-acrylonitrile copolymer, and
   (ii) 0 to 95% by weight, preferably 0 to 65% by weight, of a polymerizate resulting from grafting of acrylonitrile and styrene onto polybutadiene having a grafting rate of polybutadiene ranging from 30 to 95%. characterized in that it further comprises, based on 100 parts by weight of (a) and (b),
(c) 0.1 to 2 parts by weight, preferably 0.2 to 0.5 parts by weight, of an oxidized polyethylene having a number average molecular weight of from 3,000 to 5,000, as a lubricant.

In addition to the oxidized polyethylene the composition may comprise one or more further lubricants chosen from pentaerithrityl stearate and alkylene bis stearamide.

The compositions of the present invention may further include usual additives such as anti-oxidants, fillers, pigments, UV absorbers and flame retardants.

Among the suitable aromatic polycarbonate resins are polymers derived from a divalent phenol and a carbonate precursor, for example phosgen, haloformiate of a carbonate ester. The aromatic polycarbonate resins have, preferably, a limiting viscosity number of about 0.35 to 0.75 (as measured in p-dioxane at 30°C and expressed in dl/g). Among the divalent phenols suitable for preparing the aromatic polycarbonate resins are mononuclear and polynuclear aromatic compounds having two hydroxyl goups as functional groups which are both directly linked to a carbon atom of an aromatic ring.

As examples of suitable divalent phenols, mention is made of : bis 2,2-(4-hydroxy phenyl) propane (bisphenol-A = BPA); resoncinol, bis(4-hydroxy-5-nitro phenyl) methane; 2,2'-dihydroxy bisphenyl; 2,6-dihydroxy naphtalene; bis(4-hydroxy phenyl) sulfone; 5'-chloro-2,4'dihydroxy diphenylsulfone; 4,4'-dihydroxy diphenyloxide and 4,4'-dihydroxy-2,5-diethoxy diphenyloxide.

It is possible to prepare the aromatic polycarbonate resins using two or more divalent phenols or a copolymer of a divalent phenol with a glycol or a polyester having an acid end group or hydroxyl group. The aromatic polycarbonate resin may also be prepared in the presence of a dibasic acid. Crosslinked polycarbonate resins such as those described in US-A-4,001,184 may also be used. Mixtures of two or more of the above mentioned polycarbonate resins can also be used. Preferred polycarbonate resin is the homopolymer derived from bisphenol-A and phosgene.

The polymerizates resulting from the grafting of acrylonitrile and styrene on polybutadiene useful in the present invention as well as methods for their preparation are well known in the art and are described among others in EP-A-0,248,308, DE-A-2,259,565 and US-A-3,130,177. Specifically, EP-A-0,248,308 describes compositions of polycarbonate resins, grafted polymerizate of styrene/acrylonitrile onto polybutadiene and of copolymerizate of styrene/acrylonitrile containing a trimethylpropane tristearate as lubricant.

The styrene units of the polymerizates of acrylonitrile and styrene grafted onto polybutadiene useful in the present invention are prefrably selected from styrene, alpha-alkylstyrenes, in particular alphamethylstyrene, and their mixtures. More specifically, the sum of the styrene monomers and acrylonitrile monomers introduced during the polybutadiene grafting ranges from 30 to 70% by weight with a ratio of styrene /acrylonitrile varying from 3/1 to 3/2, combined with 70 to 30% by weight of polybutadiene.

It is preferred to use grafted copolymers comprising 50% by weight of acrylonitrile and styrene combined and 50% by weight of polybutadiene. The grafting ratio of polybutadiene is generally between 30 and 95%, more specifically between 40 to 80%, more preferably between 40 and 65%.

The styrene-acrylonitrile copolymers of the present invention and processes for making them are well known in the art and are described, among others, in NL-A-177.604.

These styrene/acrylonitrile copolymers (SAN) have generally a ratio of the styrene units to the acrylonitrile units of from 60/40 to 80/20 and a weight average molecular weight as determined by gel permeation chromatography of 70,000 to 150,000. The styrene units of the styrene/acrylonitrile copolymers useful in the present invention are preferably selected from styrene, alpha-alkylstyrenes, in particular alpha-methylstyrene, and their mixtures.

The lubricants useful in the present invention are selected among the oxidized polyethylenes having a number average molecular weight of from 3,000 to 5,000, preferably 4,000.

The lubricant of the present invention, which improves the multiaxial impact strength of the present compositions, are present, based on 100 parts by weight of (a) and (b), in an amount ranging from 0.1 to 2 parts by weight, preferably 0.2 to 0.5 parts by weight. Amounts lower than 0.1 parts by weight do not significantly improve the impact strength while amounts greater than 2 parts by weight although improving the impact strength of the compositions adversely affect other valuable properties of the present compositions.

Optionally, the present compositions may also include certain usually known and used additives, such as inert and reinforcing fillers, for example glass, mica, clay and glass fibers ; UV absorbers, such as benzophenones ans benzotriazoles; flame retardants and anti-oxidants such as phenols, phosphites and their mixtures.

In the following examples, unless otherwise mentioned, all percentages and parts are in weight.

### Comparatives examples A to G and examples 1 to 5

Compositions A, B and C of Table 1 have been prepared by mixing the ingredients at 270°C in a twin-screw extruder and the compositions D to G and 1 to 5 of Table 1 have been prepared by mixing the mentioned ingredients at 250°C in a twin-screw extruder. The various compositions have been then moulded at 250°C into test pieces.

Vicat temperature (ISO R306) and Izod impact resistance (ISO R180 = ASTM D 256) have been measured by standard tests.

Melt viscosity has been measured at 260°C and 1000s-1 shear.

Tensile modulus, tensile strength and elongation at rupture have been measured according to ISO R527.

Multiaxial impact strength has been measured according to DIN 53443 and the Charpy impact strength according to DIN 53453.

Results of these test are given in Table II.

**Table I**

| | A | C | D | F | G | 1 | 2 |
|---|---|---|---|---|---|---|---|
| PC¹ | 100 | 100 | - | - | 36 | 36 | 36 |
| ABS polymerisate² | - | | 28 | 28 | 18 | 18 | 18 |
| SAN³ | - | | 72 | 72 | 46 | 46 | 46 |
| antioxidant | 0,25 | 0,25 | 0,25 | 0,25 | 0,25 | 0,25 | 0,25 |
| Oxidized Polyethylene⁴ | - | 0,3 | - | 0,3 | - | 0,3 | 0,3 |
| Methylene bisteramide | - | 0,3 | - | 0,3 | - | - | 0,3 |

| | | | | | | | |
|---|---|---|---|---|---|---|---|
| 1. Bisphenol-A polycarbonate. Weight average molecular weight 22 500. | | | | | | | |
| 2. Grafted polymerizate of acrylonitrile polybutadiene-styrene including 50% of polybutadiene, 35% of styrene and 15% of acrylonitrile. | | | | | | | |
| 3. Copolymer of styrene-acrylonitrile including 28% of acrylonitrile, Mw = 100.000. | | | | | | | |
| 4. Oxidized polyethylene, Mₙ = 4000 | | | | | | | |

**TABEL II**

| | | A | C | D | F | G | 1 | 2 |
|---|---|---|---|---|---|---|---|---|
| Tensile strength (MPa) | | 61 | 60,7 | 47,6 | 46,9 | 52 | 52,2 | 51,4 |
| Elongation % | | 91,0 | 96,0 | 12,6 | 14,3 | 19,7 | 24,9 | 29,6 |
| Tensile molulus (GPa) | | 2,27 | 2,23 | 2,31 | 2,25 | 2,33 | 2,29 | 2,27 |

| Impact rersistance | | | | | | | | |
|---|---|---|---|---|---|---|---|---|
| Multiaxial (N.m) | | 67,2 | 79,7 | 20,1 | 21,4 | 37,5 | 50,4 | 54,4 |
| (DIN 53443) Notched Izod (KJ/m²) (ASTM D256) | 23%C | 65,0 | 15,1 | 6,0 | 14,7 | 40,7 | 38,5 | 39,0 |
| | 0%C | 11,9 | 11,1 | 5,2 | 8,2 | 24,1 | 20,2 | 26,2 |
| | -10%C | 10,9 | 10,1 | 5,2 | 7,7 | 17,3 | 24,0 | 23,7 |
| | -20%C | 9,6 | 9,8 | 5,0 | 7,1 | 16,9 | 21,1 | 20,2 |
| Charpy Impact DIN 53453) (KJ/m²) | 23%C | 19,7 | 24,6 | 4,5 | 11,0 | 18,0 | 16,5 | 16,0 |
| | 0%C | 9,4 | 20,1 | 5,0 | 9,3 | 17,5 | 14,3 | 15,4 |
| | -10%C | 8,3 | 8,0 | 4,3 | 8,3 | 13,8 | 14,1 | 14,3 |
| Melt Viscosity 260°C/1000 s-1 (Pa.s) | | 794 | 747 | 195 | 200 | 216 | 209 | 196 |
| Vicat 5kg/120°C (°C) | | 145,3 | 143,8 | 103,6 | 102,8 | 112,0 | 111,0 | 110,4 |

As clearly shopwn by these examples, the compositions of the present invention (numeros 1 and 2) have a high multiaxial impact resistance, close to the multiaxial impact tesistance of compositions comprising only polycarbonate.

Still more suprinsingly, the compositions of the present invention have notched Izod impact resistance and impact resistance according to DIN 53443 which remain exceptionally high even at low temparatures.

This result is particularly surprising since corresponding compositions containing only polycarbonate or a mixture of SAN and ABS as resinous component experienced an important drop of these impact resistance at low temperatures.

## Claims

1. Moulding compositions comprising:
(a) 10 to 75% by weight of an aromatic polycarbonate resin, and
(b) 25 to 90% by weight of a component consisting of:
(i) 5 to 100% by weight of a styreneacrylonitrile copolymer, and
(ii) 0 to 95% by weight of a polymerizate resulting from grafting of acrylonitrile and styrene onto polybutadiene having a grafting ratio of polybutadiene ranging from 30 to 95%, characterized in that it further comprises, based on 100 parts by weight of (a) and (b),
(c) 0.1 to 2 parts by weight of an oxidized polyethylene having a number average molecular weight of from 3,000 to 5,000 as a lubricant.

2. Compositions as in claim 1 comprising 10 to 50% by weight of (a) and 50 to 90% by weight of (b).

3. Compostion as in claim 1 or 2, characterized in that component (b) comprises 35 to 100% by weight of (i) and 0 to 65% weight of (ii).

4. Compositions as in anyone of the preceding claims, characterized in that component (c) is 0.2 to 0.5 parts by weight.

5. Compositions as in anyone of the preceding claims wherein component (a) is a bisphenol-A polycarbonate resin.

6. Compositions as in anyone of the preceding claims wherein component (b) (ii) is a polymerizate obtained by grafting of acrylonitrile and styrene onto polybutadiene containing 50% polybutadiene, 35% styrene and 15% acrylonitrile.

7. Composition as in anyone of claims 1 to 6, characterized in that the lubricant is an oxidized polyethylene having a number average molecular weight of 4000.

8. Composition as in anyone of the preceding claims further comprising one or more of the following additives: inert and reinforcing fillers, UV absorbers, flame retardants, anti-oxidants.

9. Composition as in anyone of the preceding claims further comprising a filler.

## Patentansprüche

1. Formmassen-Zusammensetzungen enthaltend:
(a) 10 bis 75 Gew.-% eines aromatischen Polycarbonatharzes und
(b) 25 bis 90 Gew.-% einer Komponente bestehend aus:
(i) 5 bis 100 Gew.-% eines Styrolacrylnitrilcopolymeren und
(ii) 0 bis 95 Gew.-% eines Polymerisats resultierend aus dem Pfropfen von Acrylnitril und Styrol auf Polybutadien mit einem Pfropfanteil des Polybutadiens von 30 bis 95%, dadurch gekennzeichnet, daß die Zusammensetzung weiter umfaßt, basierend auf 100 Gewichtsteilen von (a) und (b),
(c) 0,1 bis 2 Gewichtsteile eines oxidierten Polyethylens mit einem zahlengemittelten Molekulargewicht von 3000 bis 5000 als Schmiermittel.

2. Zusammensetzung nach Anspruch 1 enthaltend 10 bis 50 Gew.-% von (a) und 50 bis 90 Gew.-% von (b).

3. Zusammensetzung nach Anspruch 1 oder 2 dadurch gekennzeichnet, daß die Komponente (b) 35 bis 100 Gew.-% von (i) und 0 bis 65 Gew.-% von (ii) umfaßt.

4. Zusammensetzung nach einem der vorhergehenden Ansprüche, dadurch gekennzeichnet, daß die Komponente (c) 0,2 bis 0,5 Gewichtsteile umfaßt.

5. Zusammensetzung nach einem der vorhergehenden Ansprüche, worin die Komponente (a) ein Bisphenol-A Polycarbonatharz ist.

6. Zusammensetzung nach einem der vorhergehenden Ansprüche, worin die Komponente (b) (ii) ein Polymerisat ist, welches durch Pfropfen von Acrylnitril und Styrol auf Polybutadien erhalten worden ist, und das 50 % Polybutadien, 35 % Styrol und 15 % Acrylnitril enthält.

7. Zusammensetzung nach einem der Ansprüche 1 bis 6, dadurch gekennzeichnet, daß das Schmiermittel ein oxydiertes Polyethylen mit einem zahlengemittelten Molekulargewicht von 4000 ist.

8. Zusammensetzung nach einem der vorhergehenden Ansprüche, die weiterhin ein oder mehrere der folgenden Additive enthält: inerte und verstärkende Füllstoffe, UV-Absorber, flammhemmende Mittel, Antioxidantien.

9. Zusammensetzung nach einem der vorhergehenden Ansprüche, die weiterhin einen Füllstoff enthält.

## Revendications

1. Composition pour moulage comprenant :
(a) 10 à 75% en poids d'une résine de polycarbonate aromatique, et
(b) 25 à 90% en poids d'un composant constitué de :
(i) 5 à 100% en poids d'un copolymère de styrène et d'acrylonitrile, et
(ii) 0 à 95% en poids d'un polymérisat résultant du greffage d'acrylonitrile et de styrène sur du polybutadiène, présentant un taux de greffage du polybutadiène compris dans l'intervalle allant de 30 à 95%,
caractérisée en ce qu'elle comprend en outre, pour 100 parties en poids de (a) et (b):
(c) 0,1 à 2 parties en poids d'un polyéthylène oxydé, ayant une masse moléculaire moyenne en nombre de 3000 à 5000, en tant que lubrifiant.

2. Composition selon la revendication 1, comprenant 10 à 50% en poids de (a) et 50 à 90% en poids de (b).

3. Composition selon la revendication 1 ou 2, caractérisée en ce que le composant (b) comprend 35 à 100% en poids de (i) et 0 à 65% en poids de (ii).

4. Composition selon l'une quelconque des revendications précédentes, caractérisée en ce que le composant (c) représente 0,2 à 0,5 partie en poids.

5. Composition selon l'une quelconque des revendications précédentes, dans laquelle le composant (a) est une résine de polycarbonate dérivée du bisphénol-A.

6. Composition selon l'une quelconque des revendications précédentes, dans laquelle le composant (b) (ii) est un polymérisat obtenu par greffage d'acrylonitrile et de styrène sur du polybutadiène, contenant 50% de polybutadiène, 35% de styrène et 15% d'acrylonitrile.

7. Composition selon l'une quelconque des revendications 1 à 6, caractérisée en ce que le lubrifiant est un polyéthylène oxydé, ayant une masse moléculaire moyenne en nombre de 4000.

8. Composition selon l'une quelconque des revendications précédentes, comprenant en plus un ou plusieurs des additifs suivants : des charges inertes, des charges de renforcement, des agents absorbant les rayons UV, des agents retardateurs d'inflammation, des antioxydants.

9. Composition selon l'une quelconque des revendications précédentes, comprenant en outre une charge.
